(19) **Europäisches Patentamt**

**European Patent Office**

**Office européen des brevets**

(11) **EP 0 928 908 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.$^7$: **F16H 55/36**

(21) Anmeldenummer: **99100415.1**

(22) Anmeldetag: **11.01.1999**

(54) **Rad zur Verwendung in einem Riemenantrieb und Riemenabtrieb**

Wheel for use in a belt drive and belt drive

Roue utilisée dans un entraînement à courroie et entraînement à courroie

(84) Benannte Vertragsstaaten:
**AT BE CH CY DE DK ES FI FR GB GR IE IT LI LU MC NL PT SE**

(30) Priorität: **12.01.1998 DE 19800787**

(43) Veröffentlichungstag der Anmeldung:
**14.07.1999 Patentblatt 1999/28**

(73) Patentinhaber: **ContiTech Antriebssysteme GmbH**
**30165 Hannover (DE)**

(72) Erfinder:
• **Berger, Ralf**
**30559 Hannover (DE)**

• **Normann, Robert**
**30165 Hannover (DE)**
• **Von Rönn, Dieter**
**31515 Wunstorf (DE)**

(74) Vertreter: **Finger, Karsten (DE)**
**Continental Aktiengesellschaft**
**Patentabteilung**
**Postfach 169**
**30001 Hannover (DE)**

(56) Entgegenhaltungen:
**EP-A- 0 064 576          DE-A- 4 133 777**
**DE-A- 19 515 351       DE-A- 19 520 508**

**Beschreibung**

Die Erfindung bezieht sich gemäß Anspruch 1 auf ein Rad für einen Riementrieb, vorzugsweise einen Zahnriementrieb, wobei dieses Rad zur formschlüssigen Drehmoment-Übertragung zwischen sich und dem Riemen ungeeignet ist, insbesondere unverzahnt ist. Es ist also allenfalls zu einer reibschlüssigen Drehmoment-Übertragung geeignet. Die Erfindung bezieht sich gemäß Anspruch 6 ferner auf einen Riementrieb mit einem Riemen und zumindest einer Spann- und/oder Umlenkrolle, die auf dem Riemenrücken, also auf der unprofilierten Seite des Riemens abwälzt. Schließlich bezieht sich die Erfindung gemäß Anspruch 7 auf einen Keilrippenriementrieb, auch Multi-V-Riementrieb genannt, mit einem Keilrippenriemen und zumindest einem Antriebs- und/oder Abtriebsrad, welches auf seiner Mantelfläche, also seiner radial äußeren Kontur, eine Multi-V-Profilierung aufweist.

Aus der DE-OS 14 50 851 sind Rollen zum Spannen und/oder Umlenken eines Riementrumes bekannt, die im Querschnitt eine konvexe Wölbung der mit dem Riemen in Kontakt tretenden Mantelfläche aufweisen. Aus der DE-OS 41 33 777 ist die inverse Gestaltung bekannt. Beide Systeme führen zwar zu einer Variation der Riemenvorspannung und damit auch der Riemenspannung im Lastbetrieb, aber diese Variation besteht nur über der Axialen, nicht über der Zeit.

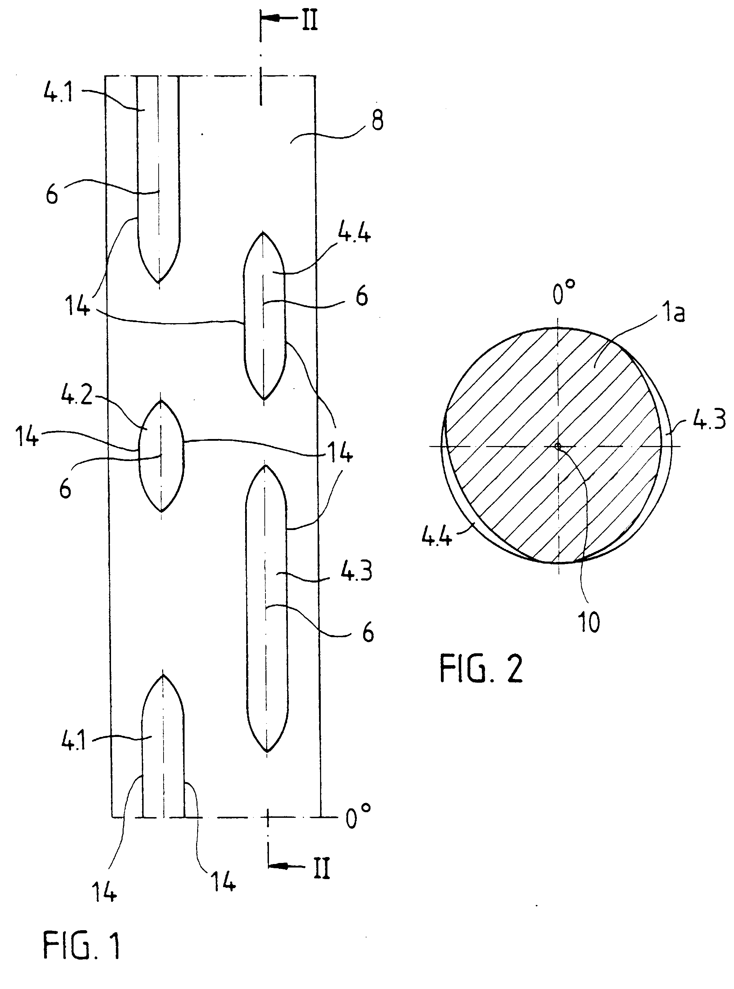

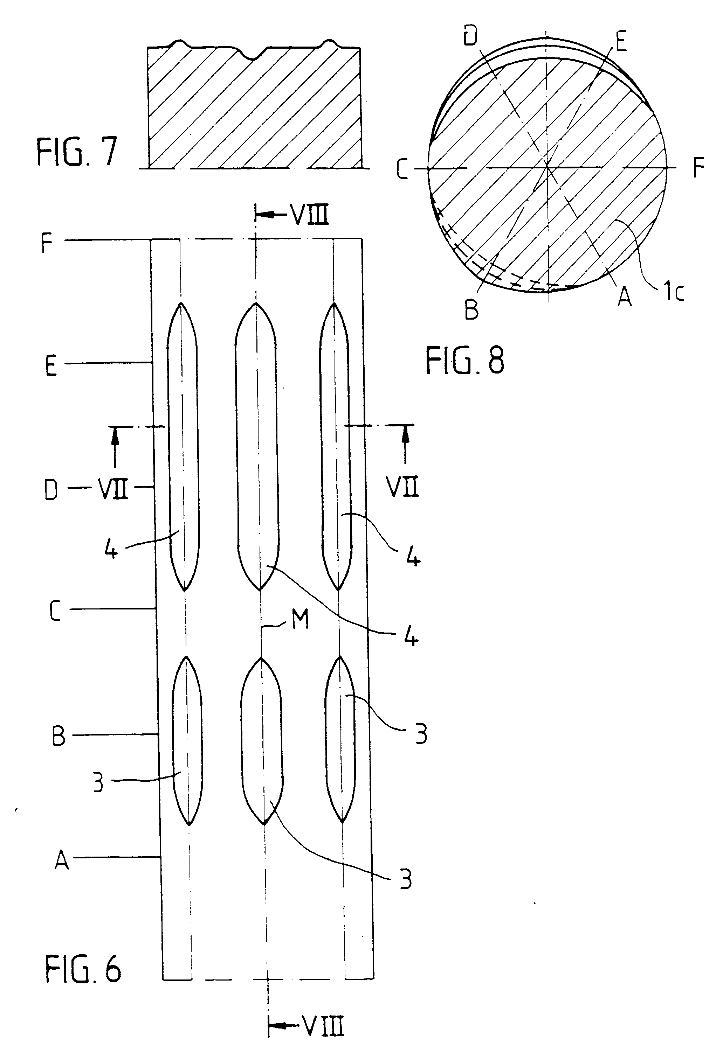

Aus der gattungsgemäßen DE 195 15 351 A1 ist eine Spann- oder Umlenkrolle bekannt, beispielsweise für einen Zahnriementrieb zum Angriff am Riemenrücken, welche auf ihrer radial äußeren Fläche eine schräg zur Umlaufrichtung angeordnete, sich über den gesamten Umfang erstreckende Erhebung auf einer ansonsten zylindrischen oder konkaven oder konvexen Oberfläche aufweist. Diese Erhebungen sind dort als "Wülste" bezeichnet. Diese Erhebungen dienen der Variation der örtlichen Riemenspannung über der Zeit, also über dem Drehwinkel. Bei den Ausführungen nach den Figuren 1 und 4 weist diese Rolle in allen Drehwinkelstellungen eine Erhebung auf einem kleinen Teil ihrer axialen Erstreckung auf, während auf dem größeren Teil der axialen Erstreckung keine Erhebung vorliegt. Wird diese Rolle quer zur Laufrichtung geschnitten, so weist sie also einen über der axialen Erstreckung des Rades schwankenden Radius auf.

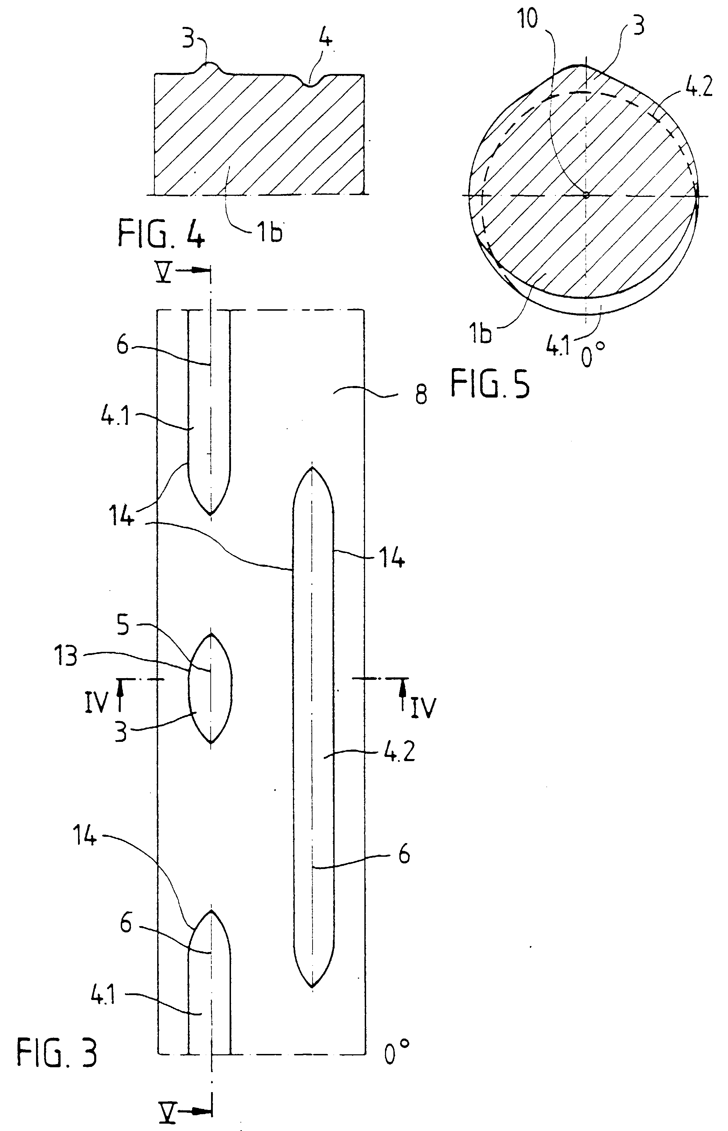

Abgesehen von der Ausführung nach Figur 3 leiten solche Räder periodische Axialkräfte in den betreffenden Riementrum ein, und lösen damit neue unerwünschte Schwingungsprobleme aus. Nach eingehender Untersuchung hat der Erfinder erkannt, dass dieser unerwünschte Effekt daran liegt, dass alle diese Erhebungen mitsamt ihrer Gipfellinien - abgesehen von ihren Wendepunkten - schräg zur Umfangsrichtung verlaufen. Nur die Ausführung nach Figur 3 der DE 195 15 351 A1 vermeidet diesen schrägen Verlauf, indem achsensymmetrisch zur radialen Mittenebene der Rolle zwei Erhebungen angeordnet sind, sodass sich die Axialkräfte opponierender Wülste gegenseitig - allerdings ähnlich wie bei einer Pfeilverzahnung mit erhöhtem Abwälzwiderstand - kompensieren.

Aus der DE 196 16 149 A1 ist ein Antriebs- oder Abtriebsrad für einen Zahnriementrieb bekannt, bei dem einige Zahnköpfe über einen Teil ihrer axialen Erstreckung gekürzt sind. Damit wird ebenfalls die örtliche Riemenspannung über der Zeit, also über dem Drehwinkel, variiert. Dies soll zu einem angenehmeren Laufgeräusch beitragen.

Die aus der DE 195 15 351 A1 bekannten Erhebungen und die aus der DE 196 16 149 A1 bekannten Kopfkürzungen oder Senken werden wegen ihrer vergleichbaren Wirkung, nämlich die örtliche Trumspannung über dem Drehwinkel zu variieren, nachfolgend zusammenfassend als "Ungleichförmigkeiten" bezeichnet. Die Begriffe "Gipfellinie" oder "Kammlinie" einerseits und "Tallinie" andererseits werden entsprechend mit dem Wort "Extremlinie" zusammengefasst.

Das Wort "Rad" wird als Oberbegriff für alle am Riemenrücken angreifenden Rollen, seien sie zum Spannen, seien sie zum Umlenken, und alle am Riemenbauch angreifenden Antriebs- und Abtriebsräder oder -scheiben benutzt. Dabei wird als "Riemenbauch" die Seite eines Riemens bezeichnet, die zur Drehmomentübertragung ausgebildet ist, im Unterschied zum "Riemenrücken", der nicht oder zumindest zu keiner wesentlichen Drehmomentübertragung ausgebildet ist.

Wo kein anderer Bezug angegeben ist, beziehen sich die Worte "längs" und "quer" immer auf die vorgesehene Riemenlaufrichtung.

Die Aufgabe der Erfindung besteht darin, weitere Möglichkeiten anzugeben, die örtliche Trumspannung über der Zeit zu variieren - um dabei den an sich bekannten und erwünschten Effekt zu erzielen, dass im Frequenzspektrum aus einem scharfen Resonanzgipfel ein breiterer und niedrigerer Resonanzhügel wird - , ohne dabei Axialkräfte zu erzeugen und ohne nennenswerte Erhöhung des Abwälzwiderstandes und der Abtriebsrate.

Diese Aufgabe wird erfindungsgemäß durch die Merkmale des Anspruches 1 oder 6 oder 7 gelöst.

Wegen des kleineren Spanvolumens bei spanender Herstellung der Ungleichförmigkeiten und insbesondere wegen des schonenderen Angriffes am zu beruhigenden Riemen ist es dabei bevorzugt, zumindest einen Teil - ganz besonders bevorzugt sämtliche Ungleichförmigkeiten - als Senken auszubilden. Jede Ungleichförmigkeit sollte eine Breite von mindestens 10 % der Breite des entsprechenden Rades aufweisen.

Die Erfindung verfolgt nicht das Ziel, die Schwingungserregung - die vor allem in dem schwankenden Drehmomentabgriff am Nockenwellenantriebsrad in Korrelation zu den Ventilsteuerzeiten zu suchen ist - zu bekämpfen, also durch synchrone Variation der Riemenvorspannung über der Zeit die Spannungsamplitude in einem Riementrum zu senken; sie versucht also nicht, gleichfrequente Gegenschwingungen zu erzeugen. Sie möchte lediglich erreichen, dass die Schwingungsantwort auf eine Erregung eine sanftere Abhängigkeit ihrer Amplitude von der Erregerfrequenz zeigt, eben einen Resonanzhügel anstelle einer Resonanzspitze. Insoweit also überhaupt durch ein erfindungsgemäßes Rad eine Schwingungserregung stattfindet, soll diese gerade so wenig wie möglich mit der Frequenz und deren ganzzahligen Vielfachen der Drehmomentschwankung am Abtriebsrad des Riementriebes zu tun haben.

Die Unterdrückung einer eigenen Schwingungserregung gelingt besonders gut, wenn das Rad gemäß Anspruch 4 keine Verzahnung aufweist. Ein solches Rad ist im Riementrieb, vorzugsweise einem Zahnriementrieb, gemäß Anspruch 6 als Spann- und/oder Umlenkrolle eingesetzt, wobei es sich mit seiner radial äußeren, die Ungleichförmigkeiten aufweisenden Kontur auf dem unverzahnten Rücken des Zahnriemens abwälzen soll. Es kann aber analog auch in einem reibschlüssigen Riementrieb eingesetzt werden, insbesondere in einem Keilrippenriementrieb. Ferner kann ein erfindungsgemäßes Rad eine Multi-V-Profilierung aufweisen und als Antriebs- oder Abtriebsrad eingesetzt werden, wozu dann gemäß Anspruch 7 die Ungleichförmigkeiten mit exakt in Umfangsrichtung verlaufender Extremlinie innerhalb der Multi-V-Profilierung anzuordnen sind.

Bei einer Verwendung als Spann- oder Umlenkrolle sollte der wirksame Radius (das ist der Radius von der Drehachse bis zur Mittellinie des Zugstranges des aufliegenden Riemens) weder ein ganzzahliges Vielfaches noch ein ganzzahliger Bruchteil (1/2, 1/3 usw.) des Teilkreisradius des Antriebs- und des Abtriebsrades sein, um die - allerdings allenfalls kleine - Schwingungserregung durch die Ungleichförmigkeiten dieses Rades in ihrer Frequenz möglichst fremd zur durch die Drehmomentschwankung aufgeprägten Erregungsfrequenz zu gestalten. Gemäß Anspruch 2 sollten dabei vorzugsweise alle Ungleichförmigkeiten auf der Radmantelfläche eine Bogenwinkelgröße im Bereich zwischen 50° und 150° aufweisen, wobei zweckmäßigerweise alle ganzzahligen Bruchteile des Vollwinkels und deren unmittelbare Umgebung vermieden werden, also insbesondere die Bereiche zwischen 58° und 62° (ca. 1/6 der Umfangslänge), zwischen 88° und 92° (ca. 1/4 der Umfangslänge), sowie der Bereich zwischen 117° und 123° (ca. 1/3 der Umfangslänge).

Zur Unterdrückung einer eigenen Schwingungserregung ist es ferner möglich, axial neben jede Senke eine so bemessene Erhebung zu plazieren, dass die Riemenvorspannung gemittelt über der gesamten Riemenbreite konstant bleibt. Das Vorspannungsintegral über der Riemenquerschnittfläche schwankt dann also überhaupt nicht über der Zeit, wohl aber schwankt die Verteilung der Riemenvorspannung auf die Querschnittsfläche über der Zeit. Auch mit dieser Ausbildung der Erfindung wird bereits eine erfreuliche Abflachung der Resonanzspitze - insbesondere der Querschwingungen im Leertrum - erreicht, wenngleich auch nicht ganz so stark wie bei einer Hinnahme auch einer zeitlichen Schwankung des Vorspannungsintegrales über der Riemenquerschnittfläche, dafür aber frei von jeglicher eigenen Schwingungserregung im Drehmomentenverlauf und damit frei von jeglichen Auswirkungen auf die Ventilsteuerzeiten bei Verwendung als Trieb zwischen Kurbelwelle und Nockenwelle in einem Innenverbrennungs-Hubkolbenmotor (internal combustion piston engine).

Die Rückwirkungsfreiheit auf die tatsächlichen Ventilsteuerzeiten erleichtert die Zusammenarbeit zwischen der Motorenentwicklung der Kunden und dem zuliefernden Zahnriementriebhersteller.

Diese Variante der Erfindung lässt sich auch dahin weiter steigern, dass sich eine - dem Betrage und/oder dem Vorzeichen nach - schwankende Konizität des Rades über seinem Umdrehungswinkel (also im Betrieb: über der Zeit) ergibt. Es versteht sich, dass zumindest zum radial inneren Ende hin einer jeglichen Konizität ein Borscheibenabschnitt den Riemen gegen Abgleiten sichern könnte; bei relativ kurzem Abstand zu benachbarten Rädern (also zu dem in Riemenlaufrichtung davor und/oder zu dem dahinter angeordneten, mit dem Riemen kämmenden oder wälzenden Rade) mit Führungseinrichtungen und nicht zu großem Konizitätswinkel ist dies aber nicht nötig.

Aber auch bei relativ langem Abstand zu benachbarten Rädern mit Führungseinrichtungen oder gar bei Verzicht auf Führungseinrichtungen an diesen benachbarten Rädern ist mit einer Weiterbildung gemäß Anspruch 6 - selbst bei Anwendung großer Konizitätswinkel - eine Verwirklichung der über dem Drehwinkel schwankenden Konizität möglich. Die danach jeweils opponierenden Konizitäten einer Phasenlage - wobei die Art der Opposition dem Betrage und/oder dem Vorzeichen nach über dem Drehwinkel schwankt - lassen den Radquerschnitt je nach Orientierung der Konizitäten als konkav oder als konvex abgeknickten Linienzug erscheinen.

Anstelle jeweils exakter Konizität - die im Querschnitt als Geradenausschnitt erscheint - sind auch krumme Querschnittsverläufe möglich. Ein doppeltkonisch taillierter Abschnitt, also mit einer Senke in der Mitte, könnte so zu einem stetig krummen konkaven Abschnitt werden und entsprechend könnte ein doppeltkonisch balliger Abschnitt, also mit einer Erhebung in der Mitte, zu einem stetig krummen konvexen Abschnitt werden. Wesentlich ist, dass sich zumindest der Betrag der Konvexität bzw. Konkavität über dem Drehwinkel des Rades ändert, vorzugsweise aber auch das Vorzeichen, sodass sich sowohl zumindest ein Abschnitt konkaver als auch zumindest ein Abschnitt konvexer Querschnittsgestalt auf dem Rade befindet.

Wenngleich die Erfindung bevorzugt an Rädern angewandt wird, die am Riemenrücken angreifen, so ist aber auch eine Anwendung an solchen Rädern möglich, die an der Funktionsseite (= Riemenbauch) des Riemens angreifen, das ist im Falle eines Keilrippenriemens die multi-V-förmig gestaltete Riemenseite[, im Falle eines Zahnriemens die gezahnte Seite]. Das Rad sollte - im Falle einer geforderten Drehmomentübertragung muss es - für das Zusammenwirken mit einem Keilrippenriemen entsprechend in Umfangsrichtung genutet sein.

Auch bei einer solchen profilierten Ausführung bringt eine Ausbildung gemäß Anspruch 4, wonach die Abwicklung der Radkontur achsensymmetrisch ist zur axial mittigen Geraden, den Vorteil, dass keine Torsionsschwingungen des Riemens erregt werden, ähnlich wie dies bereits für unprofilierte Ausführungen dargelegt wurde.

Die Erfindung wird nachfolgend anhand einiger Figuren näher erläutert. Es zeigt:

Fig. 1    eine Draufsicht auf eine Abwicklung der Mantelfläche eines Rades mit insgesamt vier erfindungsgemäßen Senken,

Fig. 2    einen Längsschnitt durch das Rad gemäß Fig. 1 entlang der dort mit II-II bezeichneten Linie,

Fig. 3    eine Draufsicht auf eine Abwicklung der Mantelfläche eines anderen Rades mit insgesamt zwei erfindungsgemäßen Senken und einer Erhebung,

Fig. 4    einen halben Querschnitt durch das Rad gemäß Fig. 3 entlang der dort mit IV-IV bezeichneten Linie,

Fig. 5    einen Längsschnitt durch das Rad gemäß Fig. 3 entlang der dort mit V-V bezeichneten Linie,

Fig. 6    eine Draufsicht auf eine Abwicklung der Mantelfläche eines weiteren Rades mit erfindungsgemäßen Senken und Erhebungen in solcher Anordnung, dass die örtlich gemittelte Trumspannung unabhängig von der Drehwinkelstellung des Rades ist und in einer Ausbildung achsensymmetrisch zur axialen Mittellinie

Fig. 7    einen halben Querschnitt durch das Rad gemäß Fig. 6 entlang der dort mit VII-VII bezeichneten Linie,

Fig. 8    einen Längsschnitt durch das Rad gemäß Fig. 6 entlang der dort mit VIII-VIII bezeichneten Linie,

Abfolge der Figuren

Fig. 9a bis Fig. 9f    als Halbquerschnitte von der Rotationsachse bis zur Mantelfläche in den in Fig. 8 mit A bis F bezeichneten Ebenen,

Fig. 10    eine Seitenansicht auf ein weiteres Rad mit erfindungsgemäßen Senken und Erhebungen in solcher schwankend konischer Anordnung, dass die örtlich gemittelte Trumspannung unabhängig von der Drehwinkelstellung des Rades ist;

analog der Figurenabfolge 9a bis 9f zeigt die Abfolge der Figuren

Fig. 11a bis
Fig. 11c und
Fig. 11e,

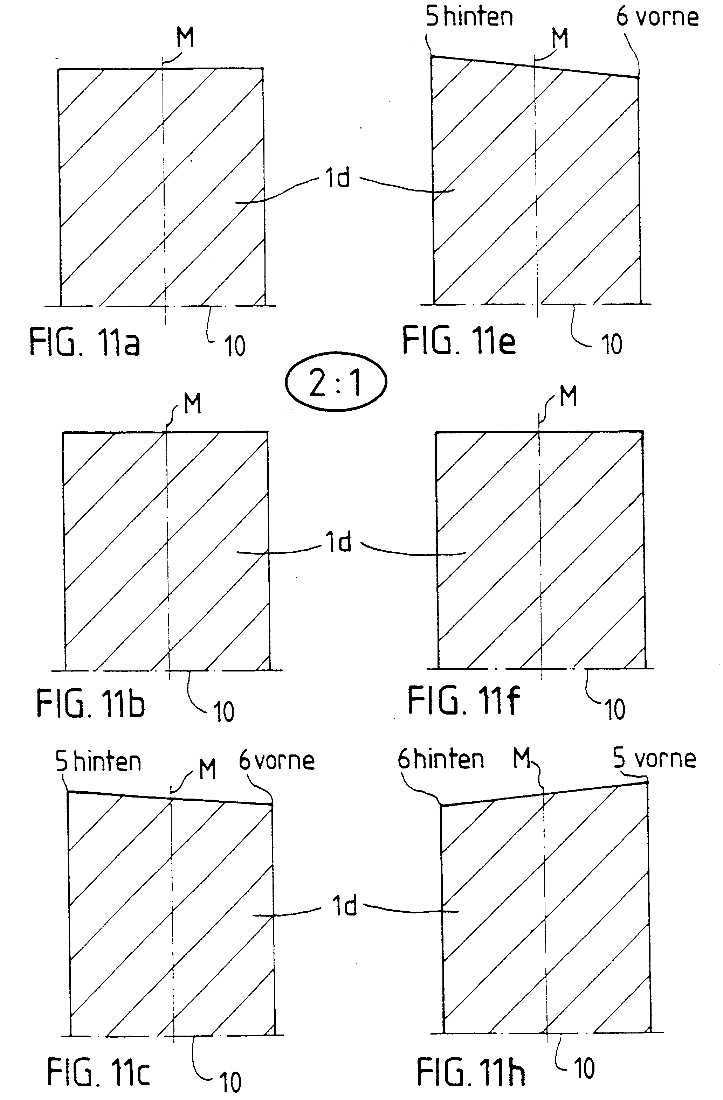

Fig. 11f und

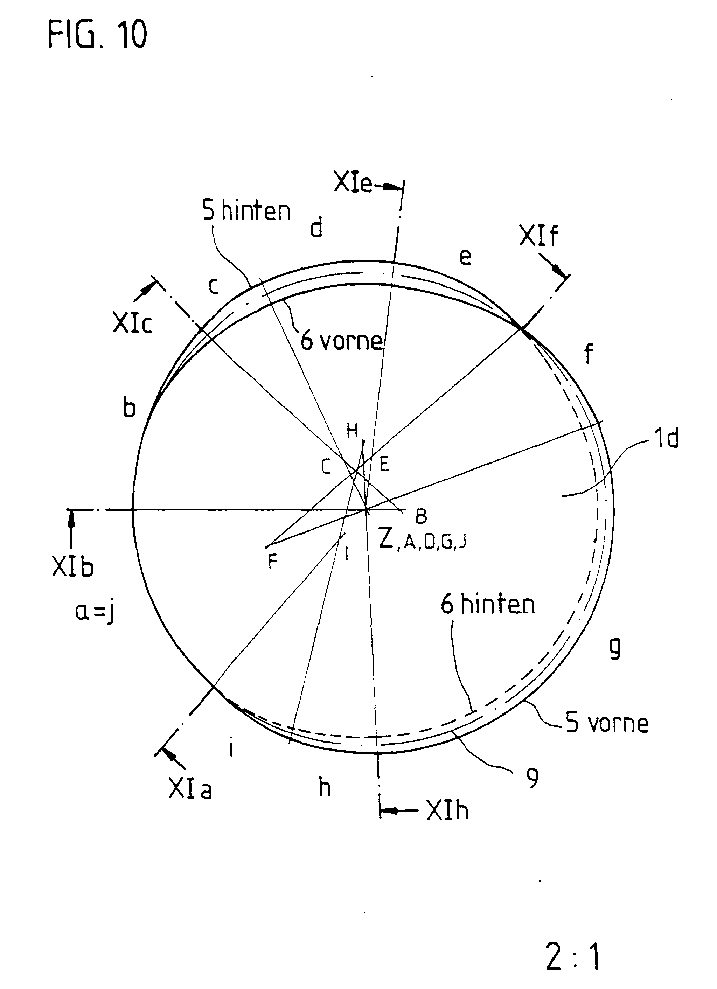

Fig. 11h    als Halbquerschnitte von der Rotationsachse bis zur Mantelfläche das selbe Rad in den in Fig. 10 mit XIa, XIb, XIc, XIe, XIf und XIh bezeichneten Stellungen;

ferner zeigt

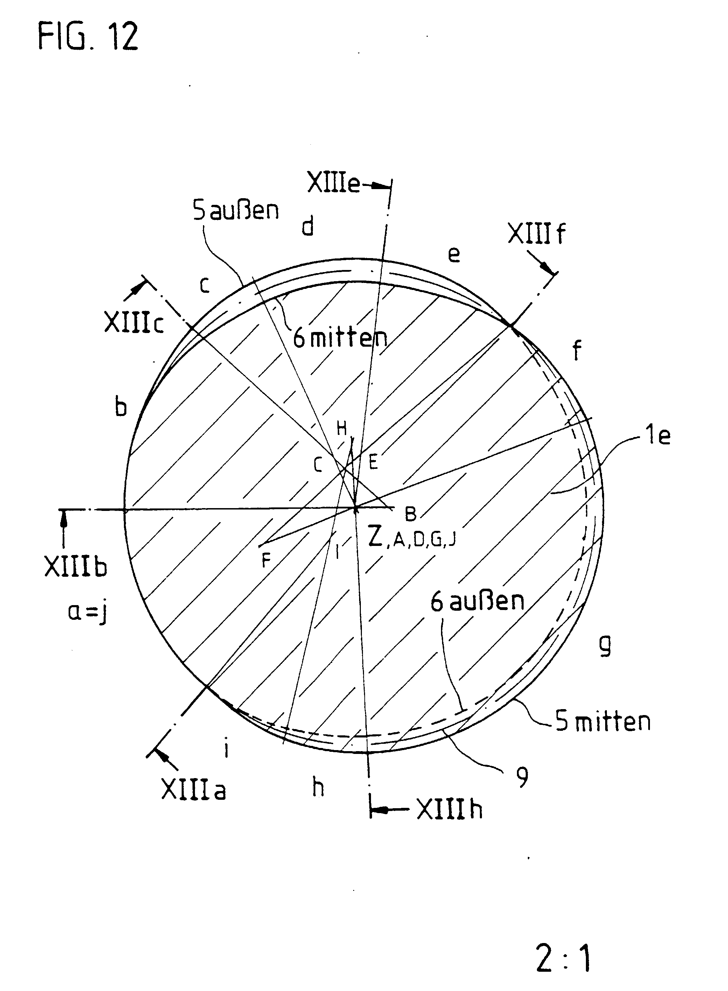

Fig. 12    einen Längsschnitt durch ein weiteres Rad mit erfindungsgemäßen Senken und Erhebungen in solcher doppeltkonischer Anordnung, dass nicht nur die örtlich gemittelte Trumspannung unabhängig von der Drehwinkelstellung des Rades ist, sondern dass darüberhinaus die Mantelfläche achsensymmetrisch zur axialen Mittellinie ist, wonach die Figurenfolge

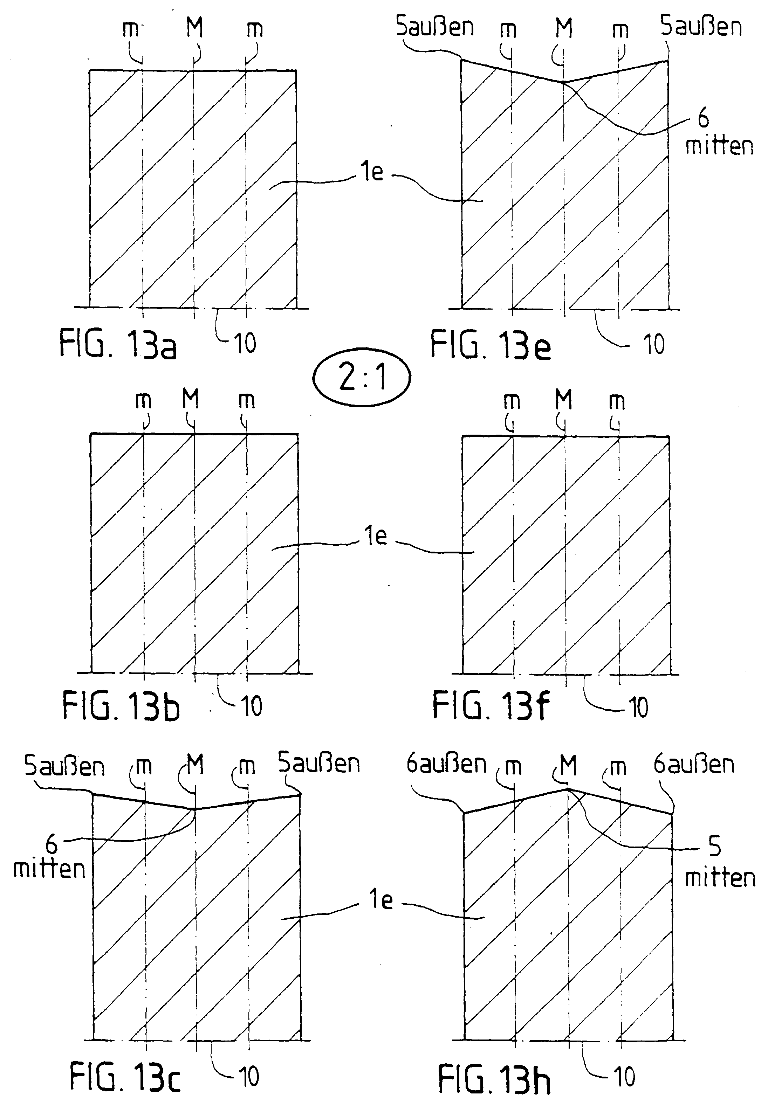

Fig. 13a bis
Fig. 13c und
Fig. 13e,
Fig. 13f
und
Fig. 13h    als Halbquerschnitte von der Rotationsachse bis zur Mantelfläche das selbe Rad in den in Fig. 12 mit XIIIa, XIIIb, XIIIc, XIIIe, XIIIf und XIIIh bezeichneten Stellungen;

schließlich zeigt

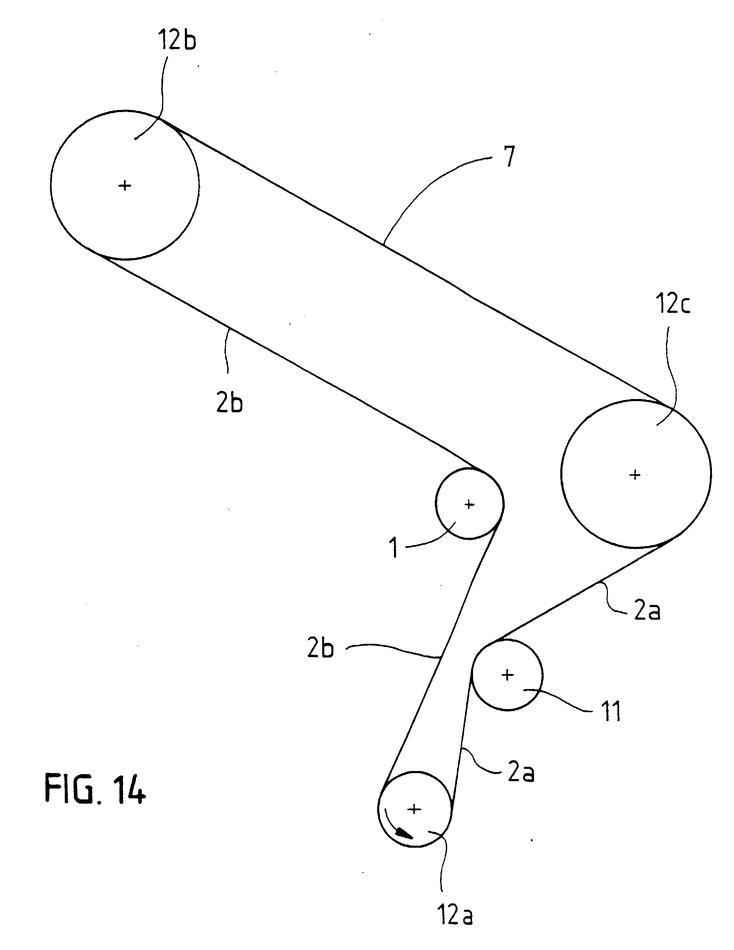

Fig. 14    in einer schematischen Seitenansicht einen Riementrieb mit einem erfindungsgemäßen Rade als Umlenkrolle im Lasttrum,

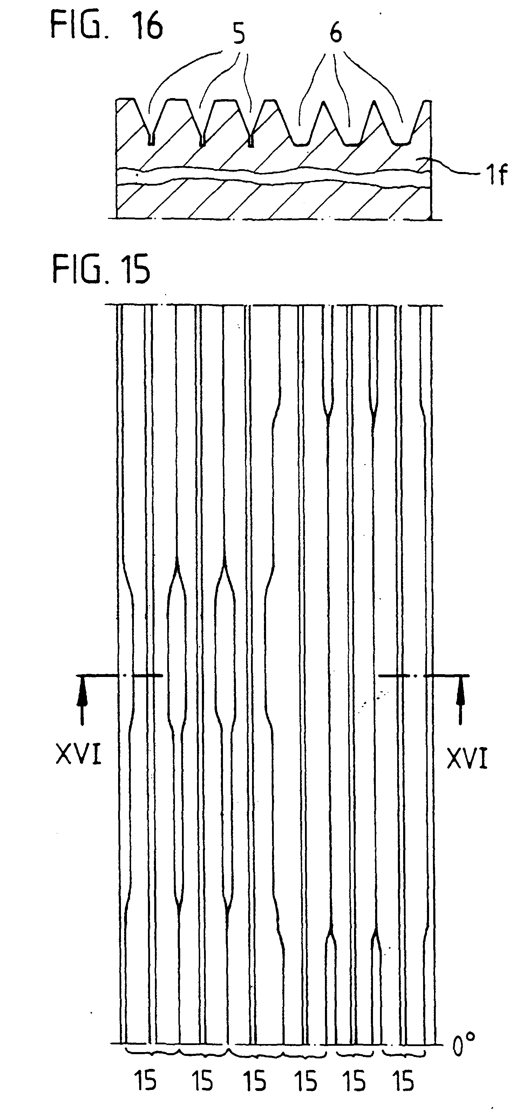

Fig. 15    eine Draufsicht auf eine Abwicklung der Mantelfläche eines so profilierten Rades, dass es sich zur Zusammenwirkung mit der profilierten Seite eines Keilrippenriemens eignet und mit erfindungsgemäßen Erhebungen (=Nutverengungen) und Senken (=Nuterweiterungen) zur zeitlichen Variation der örtlichen Riemenspannung und

Fig. 16   einen Querschnitt durch das Rad gemäß Fig. 15 entlang der dort mit XVI-XVI bezeichneten Linie.

**Figur 1** zeigt eine Draufsicht auf eine Abwicklung der Mantelfläche 8 eines Rades 1a mit erfindungsgemäßen Senken 4. Die Senken 4 sind in zwei exakt geraden Spuren angeordnet mit zwei deutlich unterschiedlich langen Senken 4.1 und 4.2 in einer linken Spur und zwei weniger unterschiedlich langen Senken 4.3 und 4.4 in einer rechten Spur.

Die Figur 1 ist in einem gemischten Maßstabe gezeichnet, und zwar 1:1 in der Umfangsrichtung, die auf dem Zeichenblatte senkrecht erscheint, und in einer Vergrößerung 2:1 in der axialen Richtung, die auf dem Zeichenblatte waagerecht erscheint.

Die Senke 4.1 reicht von 260° (= -100°) bis 70°, hat also eine Phasenlänge von 170°, die Senke 4.2 reicht von 148° bis 203°, hat also eine Phasenlänge von 55°, die Senke 4.3 reicht von 31° bis 172°, hat also eine Phasenlänge von 141° und die Senke 4.4 reicht von 189° bis 285°, hat also eine Phasenlänge von 96°. Dabei ist die in der Figur untere Abwicklungsgrenze als Abwicklungsanfang aufgefasst und ihr dementsprechend der Phasenwinkel 0° zugeordnet.

Die jeweilige Tallinie 6, also die Linie kleinsten Radius zur Rotationsachse (10 in Figur 2) des Rades 1, liegt in jeder der Senken 4.1 bis 4.4 - wie hier dargestellt - vorzugsweise in der exakten axialen Mitte der jeweiligen Senke. Bei diesem Beispiel verlaufen nicht nur die Tallinien 6 der Senken 4.1 bis 4.4 exakt in Umfangsrichtung sondern darüberhinaus auch deren seitliche Begrenzungen 14 einer jeden Senke 4, abgesehen von den vorzugsweise - wie gezeigt - gothisch spitz gekrümmt zulaufenden Böschungen am Anfang und Ende einer jeden Ungleichförmigkeit.

Im nicht eigens gezeigten Querschnitt ist vorzugsweise jede Senke etwa V-förmig gestaltet, jedoch mit einer kerbwirkungsmindernden Verrundung an jedem Knick, insbesondere an dem Übergang von nichtabgesenkten - also zylinderförmigen - Mantelflächenbereichen zur seitlichen Böschung einer Senke. Die maximale Senkentiefe sollte angesichts der üblicherweise hoch eingestellten Zugsteifigkeit der Riemen nur maximal 2 % des Raddurchmessers betragen, hier ca. 1 mm.

**Figur 2** zeigt einen Längsschnitt durch das gleiche Rad 1a entlang der in Figur 1 mit II-II bezeichneten Linie, also durch die Mitte der rechten Senkenspur mit den Senken 4.3 und 4.4. Zu erkennen ist die sanfte Böschung am Beginn und am Ende einer jeden Senke 4 in Umlaufrichtung.

In den Mantelbereichen ohne Ungleichförmigkeiten beträgt der Maßstab in der Radialen 1:1. Damit die geringe Senkentiefe von 1 mm nicht in der Strichstärke der Zeichnung untergeht, ist das r der Senken gezählt ab dem gleichförmigen Radius r (= 180mm/2 ) 3-fach vergrößert dargestellt.

Eine Ausführung gemäß den Figuren 1 und 2 ist besonders leicht auf einzelne Motorserien hin optimierbar, da für verschiedene Ausbildungen der Radmantelfläche 8 der gleiche senkenfreie Rohling urformbar ist und die günstigste Senken-Konfiguration nachfolgend durch Spanend erzeugt werden kann, zum Beispiel durch Stirnfräsen oder - noch billiger - durch Hobeln.

Auf diese Weise können unterschiedliche Senkenanordnungen trotz der Verwendung eines einzigen Urformwerkzeuges (Schmiedegesenk oder, wie hier bevorzugt, Gussform) hergestellt werden, was deshalb vorteilhaft ist, weil bekanntlich Urformwerkzeuge immer relativ teuer sind, insbesondere dann, wenn der Rollenmantel aus Metall, vorzugsweise aus Stahl, gefertigt ist.

Der nachgeschaltete spanende Verfahrensschritt bleibt angesichts des relativ kleinen Spanvolumens in einem erträglichen Kostenrahmen. Bei einer Radbreite von beispielsweise 25 mm (wegen der Vergrößerung 2:1 in axialer Richtung also 50 mm auf dem Zeichenblatte), einer Nutbreite (abgesehen vom jeweils spitz verjüngten Anfang und Ende) von 5 mm, einer Mantelflächenumfangslänge von 180 mm und einer maximalen Nuttiefe von 1 mm ist bei diesem Ausführungsbeispiel das Spanvolumen kleiner als:

$$(85 \text{ mm} + 27,5 \text{ mm} + 70,5 \text{ mm} + 48 \text{ mm}) \times 5 \text{ mm} \times 1 \text{ mm} = 1,155 \text{ cm}^3.$$

**Figur 3** zeigt eine Draufsicht auf eine Abwicklung der Mantelfläche 8 eines anderen Rades 1b mit erfindungsgemäßen Senken 4 und Erhebungen 3. Eine solche Mantelgestaltung ist insbesondere dazu geeignet, aus Kunststoff, vorzugsweise aus Polyamid 6,6 (Nylon) hergestellt zu werden, und zwar vorzugsweise durch urformendes Gießen, möglicherweise aber auch durch umformendes Prägen von einem zylinderringförmigen Halbzeug ausgehend.

Die Senken 4 sind in zwei exakt geraden Spuren angeordnet und zwar mit einer einzigen Senke 4.1 und und einer Erhebung 3 in einer linken Spur und einer einzigen Senken 4.2 in einer rechten Spur.

Wie Figur 1 ist auch Figur 3 in einem gemischten Maßstabe gezeichnet, und zwar 1:1 in der Umfangsrichtung, die auf dem Zeichenblatte senkrecht erscheint, und in einer Vergrößerung 2:1 in der axialen Richtung, die auf dem Zeichenblatte waagerecht erscheint. In Umfangslänge (180 mm) und Breite (25 mm, gezeichnet in der axial vergrößernden Verzerrung also 50 mm) stimmt dieses Rad 1b mit dem Rade 1a überein.

Die Senke 4.1 reicht von 260° (= -100°) bis 70°, hat also eine Phasenlänge von 170°, die Erhebung 3 reicht von 148° bis 203°, hat also eine Phasenlänge von 55°, die einzige Ungleichförmigkeit der rechten Spur, die Senke 4.2, reicht von 31° bis 285°, hat also eine Phasenlänge von 254°.

Die jeweilige Tallinie 6, also die Linie kleinsten Radius zur Rotationsachse (10 in Figur 2) des Rades 1, liegt in jeder Senke 4.1 und 4.2 - wie hier dargestellt - vorzugsweise in der exakt axialen Mitte der jeweiligen Senke. Analog liegt auch die Kammlinie 5 der Erhebung 3 in deren exakt axialer Mitte.

Bei diesem Beispiel verlaufen gemäß dem Hauptanspruch die Tallinien 6 der Senken 4.1 und 4.2 sowie die Kammlinie 5 der Erhebung 3 exakt in Umfangsrichtung. Darüberhinaus verlaufen - abgesehen von den Anfangs- und Endbereichen - auch die seitlichen Begrenzungen 14 einer jeden Senke 4 und die seitliche Begrenzung 13 der Erhebung 3 exakt in Umfangsrichtung.

Figur 4 zeigt einen halben Querschnitt (= Halbquerschnitt; gemeint ist ein Schnitt in einer axialen Halbebene von der Mantelfläche bis zur Rotationsachse) durch das gleiche Rad 1b entlang dem in Figur 3 mit IV-IV angegebenen Schnittverlauf. Um zur Figur 3 zu passen, ist auch hier der vergrößernde Maßstab in der Axialen 2:1 gewählt. Bezogen auf die Mantelbereiche ohne Ungleichförmigkeiten beträgt der Maßstab in der Radialen 1:1.

Damit die dem absoluten Maß nach geringe Senkentiefe von 1 mm und Erhebungshöhe von 0,8 mm nicht in der Strichstärke der Zeichnung untergeht, sind die Ungleichförmigkeiten, also deren r bezogen auf den gleichförmigen Radius r = 180mm/2 , um das 3-fache vergrößert dargestellt, also in einer analogen Weise, wie bereits bei Figur 2.

Etwas abweichend von dem in den Figuren 1 und 2 dargestellten Rade la ist bei diesem Rade 1b jede Senke 4 und auch die Erhebung 3 entsprechend einer Cosinus-Welle gestaltet, womit eine noch bessere Begrenzung der Kerbwirkung gelingt, was insbesondere angesichts der Pressungserhöhung im Kontakt zum hier nicht dargestellten Riemen im Bereich der Erhebung 3 wesentlich ist. Die maximale Senkentiefe (abgesehen natürlich von der Böschung am Anfang und Ende) beträgt - wie auch beim Rad la - 1,0 mm, die Erhebungshöhe 0,8 mm.

Figur 5 zeigt einen Längsschnitt durch das gleiche Rad 1b gemäß Fig. 3 entlang der dort mit V-V bezeichneten Linie, also durch die Mitte der linken Spur von Ungleichförmigkeiten mit einer Erhebung 3 und einer Senke 4.1. Analog der Darstellungsweise in Figur 2 und passend zu der der Figur 4 beträgt auch hier, bezogen auf die Mantelbereiche ohne Ungleichförmigkeiten, der Maßstab in der Radialen 1:1. Wie schon in Figur 2, so ist auch hier der Phasenwinkel im Uhrzeigersinn gezählt, wobei aber hier der Bezug 0° nach unten gelegt ist, um dem Zusammenhang zum Halbquerschnitt (Fig. 4) daneben entsprechend den Normen für technische Zeichnungen gerecht zu werden.

Damit die dem absoluten Maß nach geringe Senkentiefe von 1 mm und Erhebungshöhe von 0,8 mm nicht in der Strichstärke der Zeichnung untergeht, sind die Ungleichförmigkeiten, also deren r bezogen auf den gleichförmigen Radius r = 180mm/2 , um das 3-fache vergrößert dargestellt.

In dieser Figur 5 ist die sanfte Böschung am Beginn und am Ende der Erhebung 3 und der Senke 4.1 (wie auch der Senke 4.2 der anderen Spur) in Umlaufrichtung zu erkennen. In gestrichelter Linie ist die Senke 4.2 angegeben.

Figur 6 zeigt eine Draufsicht auf eine Abwicklung der Mantelfläche eines weiteren Rades 1c. Wie schon bei den Figuren 1 und 3, so soll auch hier die Umfangslänge 180 mm betragen, die Breite 25 mm und der Maßstab soll in Längsrichtung 1:1 sein, in der axialen Richtung hingegen 2:1 vergrößernd.

Auf diesem Rade 1c sind erfindungsgemäße Erhebungen 3 und Senken 4 so angeordnet, dass die örtlich gemittelte Trumspannung über dem Drehwinkel des Rades 1c zumindest im wesentlichen - vorzugsweise exakt - konstant ist. Ferner ist dieses Rad 1c achsensymmetrisch zur axialen Mittellinie M.

Dazu sind die Ungleichförmigkeiten in drei Spuren angeordnet, nämlich einer exakt mittigen und zwei davon seitlichen in gleichem Abstande. Damit werden weder Longitudinalschwingungen, die die Gefahr von Peitschenschwingungen vergrößern würden, noch Axial-Schwingungen eingeleitet. Zur Erzielung der Symmetrie und der Integralspannungs-Gleichheit gilt für alle Drehwinkelstellungen: Wo in der mittleren Spur eine die Trumspannung erhöhende Erhebung 3 angeordnet ist, ist in den beiden Randspuren jeweils eine - in beiden Randspuren gleich bemessene - Senke angeordnet und, wo in der mittleren Spur eine die Trumspannung senkende Senke 3 angeordnet ist, ist in den beiden Randspuren jeweils eine - in beiden Randspuren gleich bemessene - Erhöhung angeordnet.

Dabei sind - wie Figur 7, die obere Hälfte eines Querschnittes entlang der in Figur 6 gezeigten Linie VII-VII, zeigt - die zeitgleich (also in gleicher Winkelstellung) wirkenden Erhebungen und Senken im Verhältnis zueinander so bemessen, dass sich gemittelt über die Riemenquerschnittsfläche oder Riemenbreite, die spannungserhöhende und die spannungssenkende Wirkung der verschiedenen zeitgleich wirkenden Ungleichförmigkeiten genau kompensieren. In guter Näherung wird dies dadurch erreicht, dass die Querschnittsflächensumme der Erhebungen bzw. Senken beider Randspuren (gepunktet markiert) gleich der Querschnittsfläche (gewellt markiert) der Senke bzw. Erhebung der mittleren Spur ist.

Gemäß dem in Figur 4 empfohlenen cosinusförmigen Querschnitt aller Ungleichförmigkeiten sollte die Breite einer Ungleichförmigkeit einer jeden Randspur etwa das 0,707-fache (die Hälfte von 2 ) der Breite der inversen Ungleichförmigkeit in der mittleren Spur in der gleichen Winkelstellung betragen und entsprechend sollte die Ungleichförmigkeitstiefe bzw. -höhe in einer jeden Randspur etwa das 0,707-fache der Breite der Höhe bzw. Tiefe der inversen Ungleichförmigkeit in der mittleren Spur in der gleichen Winkelstellung betragen.

Im übrigen entspricht die Darstellungsweise mit ihrer Maßstabswahl dem bereits zu Figur 4 Ausgeführten, also dreifach übertrieben groß gezeigten Radialabweichungen der Ungleichförmigkeiten bei ansonsten eingehaltenem Maßstabe 1:1.

**Figur 8** zeigt einen Längsschnitt durch das Rad gemäß Figur 6 entlang der dort mit VIII-VIII bezeichneten Linie, die gleichzeitig die axiale Mittellinie M ist. Abgesehen von den Radiendifferenzen zum gleichförmigen Radius, die 3-fach übertrieben dargestellt sind, beträgt der Maßstab 1:1.

Der Verlauf der Extremlinie 5/6 der Ungleichförmigkeiten in der Randspur in der Blickrichtung dahinter ist gestrichelt eingezeichnet insoweit er von der mittleren Spur verdeckt ist. Der 0°-Bezugspunkt ist so gewählt, dass Figur 8 entsprechend den Zeichnungsnormen zur nebenstehenden Figur 7 passt.

In dieser Figur - wie auch schon in der zugehörigen Figur 6 - sind in sechs verschiedenen Winkeltellungen, die ihrer Reihenfolge nach mit A, B, C, D, E unf F bezeichnet sind, fett strichpunktiert Radien bzw. Axiale angedeutet, die den Schnittverlauf für entsprechend aufeinanderfolgende Halbschnitte in der **Figurenfolge 9** zeigen. Diese Abfolge soll vor allem die zeitliche Variation der örtlichen Riemenvorspannung verdeutlichen.

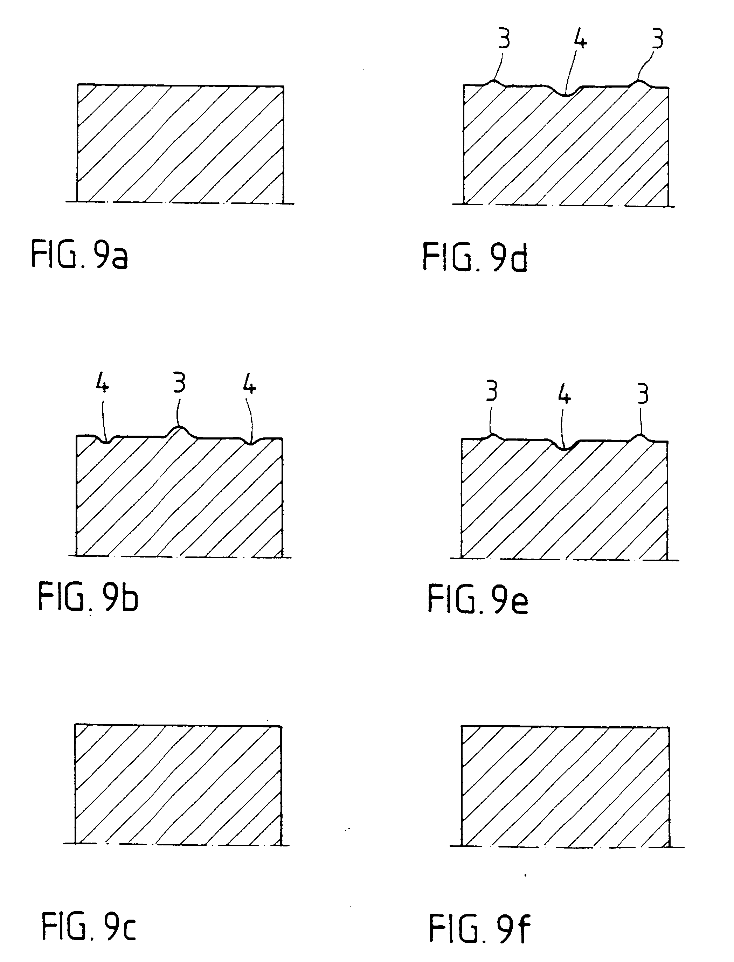

Dabei zeigt **Figur 9a** den Halbquerschnitt in einer um 60° gegenüber der in Fig. 6 willkürlich festgelegten 0°-Stellung im Uhrzeigersinn gedrehten Halbebene. In dieser Stellung gibt es keinerlei Ungleichförmigkeit.

**Figur 9b** zeigt den Halbquerschnitt in einer um 120° gegenüber der 0°-Stellung im Uhrzeigersinn gedrehten Halbebene. In dieser Stellung zeigt sich an Ungleichförmigkeiten in der Mitte eine Erhebung 3 und in den beiden Randspuren je eine halbkompensierende Senke 4.

**Figur 9c** zeigt den Halbquerschnitt in einer um 180° gegenüber der 0°-Stellung im Uhrzeigersinn gedrehten Halbebene. In dieser Stellung gibt es keinerlei Ungleichförmigkeit.

**Figur 9d** zeigt den Halbquerschnitt in einer um 240° gegenüber der 0°-Stellung im Uhrzeigersinn gedrehten Halbebene. In dieser Stellung zeigt sich an Ungleichförmigkeiten in der Mitte eine Senke 4 und in den beiden Randspuren je eine halbkompensierende Erhebung 3. In dieser Stellung sind die Tiefe bzw. die Höhen der Ungleichförmigkeiten nur so wenig geringer wie in der Figur 7, dass diese Figur 9d mit Figur 7 im Rahmen der mit dieser Strichstärke möglichen Zeichengenauigkeit deckungsgleich ist.

**Figur 9e** zeigt den Halbquerschnitt in einer um 300° gegenüber der 0°-Stellung im Uhrzeigersinn gedrehten Halbebene. In dieser Stellung zeigt sich an Ungleichförmigkeiten ebenfalls in der Mitte eine Senke 4 und in den beiden Randspuren je eine halbkompensierende Erhebung 3. Auch in dieser Stellung sind die Tiefe bzw. die Höhen der Ungleichförmigkeiten nur so wenig geringer wie in der Figur 7, dass diese Figur 9e mit Figur 7 im Rahmen der mit dieser Strichstärke möglichen Zeichengenauigkeit deckungsgleich ist.

**Figur 9f** zeigt den Halbquerschnitt in der 0°-Stellung. In dieser Stellung gibt es keinerlei Ungleichförmigkeit.

**Figur 10** zeigt eine Seitenansicht, also ein Ansicht in axialer Blickrichtung, auf ein weiteres Rad 1d mit erfindungsgemäßen Erhebungen 3 und Senken 4 in solcher schwankend konischer Anordnung, dass die über der Axialen gemittelte Trumspannung unabhängig von der Drehwinkelstellung des Rades ist.

Der Maßstab beträgt in dieser und allen folgenden Figuren, ohne jegliche Verzerrung, 2:1.

Entsprechend der - gegenüber den vorherigen Figuren unveränderten - realen Radbreite von 25 mm sind die Halbquerschnitte der Figurenfolge 11 also 50 mm breit gezeichnet und ihr Radius ist - bei gleicher mittlerer Radumfangslänge wie bei den vorherigen Ausführungsbeispielen - in den Figuren 10 und 11 mit 180mm/ dargestellt.

In dem Sektor a=j ist das Rad zylindrisch, was darin zum Ausdruck kommt, dass in der Seitenansicht die Mantelkontur an der in Blickrichtung vorderen Stirnseite sich mit der Mantelkontur an der hinteren Stirnseite deckt.

In den Sektoren b und c weist das Rad eine über dem im Uhrzeigersinn gezählten Drehwinkel zunehmende Konizität auf, und zwar eine Konizität solcher Orientierung, dass sich das Rad zur in Blickrichtung vorderen Stirnseite hin verjüngt. Zwecks Konstanthaltung der über der Querschnittsfläche gemittelten Riemenzugkraft wird der zum Zentrum Z zählende Radradius auf der hinteren Stirnseite um genau den Betrag vergrößert, wie der Radradius auf der vorderen Stirnseite verkleinert wird.

Zwecks Konstanthaltung der über der Querschnittsfläche gemittelten Riemenzugkraft wird der zum Zentrum Z zählende Radradius auf der hinteren Stirnseite um genau den Betrag vergrößert, wie der Radradius auf der vorderen Stirnseite verkleinert wird. In den Sektoren abnehmender und in denen inverser Konizität gilt das Analogon; in seiner exakten axialen Mitte längs geschnitten würde also das Rad eine exakt kreisförmige Schnittlinie zeigen. Diese ist deshalb der Übersicht halber in dünner strichpunktierter Linie 9 hier eingezeichnet.

Im Sektor d weist das Rad eine über dem Drehwinkel konstante Konizität auf, und zwar eine Konizität solcher Orientierung, dass sich das Rad zur in Blickrichtung vorderen Stirnseite hin verjüngt. Zwecks Konstanthaltung der über der Querschnittsfläche gemittelten Riemenzugkraft ist der zum Zentrum Z zählende Radradius auf der hinteren Stirnseite um genau den Betrag vergrößert, wie der Radradius auf der vorderen Stirnseite verkleinert ist.

Im Sektor e weist das Rad eine über dem Drehwinkel abnehmende Konizität auf, und zwar eine Konizität der Orientierung, dass sich das Rad zur in Blickrichtung vorderen Stirnseite hin verjüngt. Die Sektorgrenze zum nachfolgenden Sektor f ist hier - ohne dass dies zwingend wäre - gerade so gewählt, dass an dieser eine singuläre zylindrische Mantellinie entsteht, wonach im Sektor f eine betragsmäßig zunehmende Konizität inverser Orientierung aufgebaut wird, also eine Konizität der Orientierung, dass sich das Rad zur in Blickrichtung hinteren Stirnseite hin verjüngt; während also bislang beide Extremlinien, also die Tallinie $6_{vorne}$ der vorderen Stirnseite und die Kammlinie $5_{hinten}$ der hinteren Stirnseite, beide aus dieser Richtung sichtbar waren, verbirgt sich in den nun folgenden Sektoren f bis i die Tallinie $6_{hinten}$ der hinteren Stirnseite hinter der allein noch sichtbaren Kammlinie $5_{vorne}$ der vorderen Stirnseite; der Übersichtlichkeit halber ist aber dennoch auch die Tallinie $6_{hinten}$ dargestellt und zwar in dünnerer gestrichelter Linie, wie sie gemäß den Normen für technische Zeichnungen für verdeckte Kanten zu wählen ist.

Die Konstruktion der Kontur einer der Stirnseiten kann durch eine Aneinanderreihung von Kreisbögen a bis j erfolgen; dies ist hier für die hintere Kontur 5/6 erfolgt. Die hintere Kontur 5/6 ist wie folgt zusammengesetzt:

Der Kreisbogen des Sektors a=j, d und g hat den Mittelpunkt Z, der gleichzeitig der Mittelpunkt der kreisförmigen Radkontur ist, die in der axialen Mitte des Rades vorhanden ist. Der Kreisbogen b hat den Mittelpunkt B, der Kreisbogen c hat den Mittelpunkt C, der Kreisbogen e hat den Mittelpunkt E, der Kreisbogen f hat den Mittelpunkt F, der Kreisbogen h hat den Mittelpunkt H und der Kreisbogen i hat den Mittelpunkt I.

Aus der hier gewählten, bereits genannten Vorschrift, dass an der vorderen Stirnseite der Radius zu dem durch die Rotationsachse markierten Radzentrum Z genau um das Maß gegenüber der Linie 9 vergrößert bzw. verkleinert ist, wie der Radradius an der hinteren Stirnseite über dem Drehwinkel verkleinert bzw. vergrößert ist, folgt in eindeutiger Beziehung für jeden Drehwinkel aus dem Radradius der hinteren Stirnseite der Radradius der vorderen Stirnseite. Abstrakter ausgedrückt, lassen sich also die Konturen an der vorderen und hinteren Stirnseite als Achsenspiegelung entlang einer gekrümmten Symmetrieachse (nämlich 9) darstellen oder noch weiter abstrahiert als eineindeutige (also beidseitig eindeutige) konforme Abbildungen zueinander auffassen.

Die **Figurenfolge 11** zeigt in sechs ungleichmäßig verteilten und in Figur 10 markierten Schnitthalbebenen, die der Einfachheit und Übersichtlichkeit halber allesamt auf Sektorgrenzen der hinteren Stirnflächenkontur liegen, Halbschnitte durch das Rad 1d.

In den **Figuren 11a und 11b** sowie dem gesamten Winkelbereich dazwischen und in der **Figur 11f** zeigt sich ein über der axialen Erstreckung konstanter Radradius, der von der Mantelfläche jeweils in radialer Ebene zur Drehachse 10=Z zu zählen ist. In den **Figuren 11c und 11e** zeigt sich eine nach rechts verjüngende Konizität des Rades 1d; die vordere Stirnseite aus Figur 10 ist hier rechts zu sehen. In der **Figur 11h** zeigt sich eine nach links verjüngende Konizität.

In der axialen Mitte, die in dünner strichpunktierter Linie M angedeutet ist, ist in allen diesen sechs Figuren der Radius gleich, nämlich realiter 180mm/2 , im gewählten Zeichnungsmaßstab 2:1 also 180mm/ , was etwa 58 mm entspricht.

Ein solches Rad regt leichte Querschwingungen des Riemens an, insbesondere bei Anordnung im Leertrum. Wie bereits im Zusammenhang mit Anspruch 6 dargelegt, lässt sich dieser Effekt durch eine achsensymmetrische Gestaltung vermeiden.

Das Rad 1e, das in der **Figur 12** und der **Figurenfolge 13** dargestellt ist, folgt diesem Gedanken, stimmt aber ansonsten mit dem Rade 1d überein, das in der Figur 10 und der Figurenfolge 11 bereits behandelt ist. Gedanklich erhält man das Rad 1d, indem man ein Rad 1e in der Axialen auf die halbe Breite zusammenstaucht zu einem "Halbrad", dieses an der vorderen (gemäß Figur 10) bzw. rechten (gemäß Figuren 11) Stirnfläche spiegelt und dieses durch Spiegelung erhaltene zweite "Halbrad" mit dem ersten phasengerecht an der Spiegelstirnfläche zusammenfügt.

Anstelle einer Seitenansicht wird das so definierte Rad 1e zweckmäßigerweise mit einem Längsschnitt mitten durch seine axiale Mitte M beschrieben, die in den Figuren 13 in dünner strichpunktierter Linie angedeutet ist. Abgesehen von den Bezeichnungen ("1e" statt "1d", "XIII" statt "XI", "außen" statt "hinten/ links" und "mitten" statt "vorne/rechts") sowie der als Markierung einer Schnittfläche nunmehr erforderlichen Schraffur der ehemals vorderen/rechten Stirnfläche stimmt somit Figur 12 im übrigen mit der Figur 10 überein.

Die **Figurenfolge 13** zeigt in sechs ungleichmäßig verteilten und in Figur 12 markierten Schnitthalbebenen, die der Einfachheit und Übersichtlichkeit halber allesamt auf Sektorgrenzen der äußeren Stirnflächenkontur liegen, Halbschnitte durch das Rad 1e.

In den **Figuren 13a und 13b** sowie dem gesamten Winkelbereich dazwischen und in der **Figur 13f** zeigt sich ein über der axialen Erstreckung konstanter Radradius, der von der Mantelfläche jeweils in radialer Ebene zur Drehachse 10 (=Z) zu zählen ist. In diesem Drehwinkelbereich bzw. an diesem singulären Drehwinkel (Figur 13f) entspricht der Radmantel also einem Zylinderflächenausschnitt.

In den **Figuren 13c und 13e** zeigt sich eine Mittentaillierung des Rades 1e, also eine konkave Halbquerschnittsgestalt. In der **Figur 13h** zeigt sich eine nach axial außen hin verjüngende Orientierung der Doppelkonizität; man könnte diese Halbquerschnittsgestalt auch als ballig bezeichnen.

Mit einer dünnen strichpunktierten Linie M ist die axiale Mitte dieses Rades le angedeutet ist. Ferner sind auf $^1/_4$ und auf $^3/_4$ der Radbreite in strichdoppelpunktierter Linie m die axialen Ebenen markiert, in denen über dem gesamten Drehwinkel - also auch denen, die in den Figuren 13c, 13e und 13h gewählt sind - der Radius konstant ist, nämlich realiter 180mm/2 , im gewählten Zeichnungsmaßstabe 2:1 also 180mm/ , was etwa 58 mm entspricht.

Ein solches Rad regt keinerlei Querschwingungen des Riemens an, auch nicht bei Anordnung im Leertrum. Für diesen Vorteil muss allerdings hingenommen werden, dass auch der erwünschte Effekt der Abflachung der Resonanzspitzen geringer ausfällt; immerhin aber reicht er für viele Anwendungen auch so noch aus, insbesondere dann, wenn die Riemenbreite im Verhältnis zur Quersteifigkeit des Riemens groß ist. Für Triebe mit Keilrippenriemen sollte ein solches Rad nur verwendet werden, wenn die Riemenbreite mindestens das 5-fache der Riemenhöhe beträgt, für Triebe mit Zahnriemen nur dann, wenn die Riemenbreite mindestens das 6-fache der Zahnhöhe beträgt.

Es ist auch möglich, anstelle eines Orientierungswechsels und eines Betragswechsels in der Doppelkonizität, wie sie hier gezeigt ist, nur einen Betragswechsel der Doppelkonizität vorzunehmen. Dann ist die ballige Orientierung der Doppelkonizität, wie sie in Figur 13h gezeigt ist, günstiger, weil sie die besseren Zentriereigenschaften für den Riemenlauf bringt und, weil sie zu verminderten Spannungen an den Riemenrändern führt, was deren Verschleiß stark mindert. Um aber im erwünschten Sinne einer Resonanzspitzenabflachung noch ausreichend wirksam zu sein, sollten die verwendeten Riemen um weitere 20 % breiter sein im Verhältnis zu ihrer jeweiligen Bezugshöhe als am Ende des vorherigen Absatzes angegeben.

Statt des in der Axialen scharfkantigen Überganges der linken in die inverse rechte Konizität an der Linie M kann auch ein gerundeter Übergang gewählt werden, der Pressungs- und Spannungsspitzen in Riemenmitte vermindert.

Die bislang dargestellten Ausführungen der Mantelfläche von Rädern sind dazu bestimmt, mit einer unprofilierten Fläche eines Riemens 7 zusammenzuwirken, insoweit es sich also um einen profilierten Riemen handelt, mit dem Riemenrücken. **Figur 14** zeigt schematisch die Anwendung eines solchen Rades 1 als Umlenkrolle im Lasttrum 2b eines Nockenwellen-Zahnriementriebes. Hierin sind alle profilierten Räder (d. h. bei diesem Zahnriementrieb: gezahnte Räder) mit dem Bezugszeichen 12 angesprochen, und zwar das Kurbelwellenritzel mit 12a, das Nockenwellenrad mit 12b und das Einspritzpumpenrad mit 12c.

Die Umlenkrolle 1 dient bekanntlich der Vergrößerung des Umschlingungswinkels am Kurbelwellenrad 12a. Ohne sie müsste das Kurbelwellenrad zwecks ausreichender Riemenlebensdauer einen wesentlich größeren Durchmesser haben; zur Einhaltung des für einen Viertaktmotor erforderlichen Untersetzungsverhältnisses 2:1 müssten dann aber auch das Nockenwellenrad 12b und das Einspritzpumpenrad 12c entsprechend größer sein.

Der Riemen drückt also mit erheblichen Zugkräften gegen den Mantel der Umlenkrolle 1. Darum folgt er trotz seiner Quersteifigkeit den erfindungsgemäßen, geradlinig in der Umfangsrichtung verlaufenden Senken, ohne örtliches Abheben von der Mantelfläche. Kommt es jedoch zum örtlichen Abheben, so sollte die Senkentiefe reduziert werden und/oder das "Gefälle" - in axialer und/oder in Umfangsrichtung - in eine Senke reduziert werden oder die Riemenvorspannung erhöht werden.

Es kann auch der Mantel der Spannrolle 11 im Leertrum 2a, die ebenfalls auf die unprofilierte Seite des Zahnriemens 7 einwirkt, in erfindungsgemäßer Weise gestaltet werden. Wegen der im Leertrum geringeren Riemenspannung und wegen des kleineren Umschlingungswinkels ist insbesondere darauf zu achten, dass das Gefälle in die Senken herein klein genug ist, um ein örtliches Abheben des Riemens zu vermeiden.

Unbeschadet der bevorzugten Einwirkung erfindungsgemäßer Räder auf eine unprofilierte Riemenseite sind aber auch erfindungsgemäße Räder möglich, die auf die profilierte Seite eines Riemens einwirken. Dies geht natürlich leichter auf eine längsprofilierte Riemenseite wie bei einem Keilrippenriemen, wie dies in den folgenden Figuren 15 und 16 dargestellt ist; es geht aber auch auf eine querprofilierte Riemenseite, wie dies die Figuren 17 und 18 zeigen.

**Figur 15** zeigt in Draufsicht die abgewickelte Mantelfläche eines Rades 1f, dessen Multi-V-Profilierung zur Einwirkung auf die profilierte Seite eines Keilrippenriemens bestimmt ist.

Die vorherigen Text als "Erhebungen" bezeichneten Stellen dienen dazu, den Riemen örtlich (und zeitlich) auf einen größeren Abwälzradius zu zwingen, also zu "erheben", so wie die "Senken" den Riemen - unter der Voraussetzung hinreichender Spannung - den Riemen auf einen kleineren Abwälzradius ausweichen lassen, also zu "senken".

Auch im Zusammenhang mit Keilrippenriemen ist es möglich, die Riemenspannung örtlich durch tatsächliche Erhebungen auf der Radmantelfläche zu erhöhen bzw. durch tatsächliche Senken zu reduzieren; indessen ist es besonders zweckmäßig - wie hier gezeigt - die riemenerhebende Wirkung durch Nutverengungen hervorzurufen. Man kann - und hier ist es so dargestellt - Senken analog als Nuterweiterungen darstellen ("darstellen" im Sinne von "erzeugen"). Diese Art der Generierung von Riemenerhebungen und -senkungen hat den Vorteil, dass die Hüllfläche des Rades unverändert bleibt. Insoweit die V-Nuten ohnehin in einem nachträglichen Bearbeitungsschritt erzeugt wurden, kann also das eingesetzte Halbzeug unverändert bleiben. Darüberhinaus braucht nichts an der Handhabung, Verpackung, Transport, Lagerung etc. verändert zu werden. Automatisch greifende Montage-Roboter arbeiten häufig zuverlässiger, wenn sie nur eine kreisrunde Fläche zu erfassen brauchen.

Weil es für die Wirkung der Erfindung letzlich unerheblich ist, durch welche Variante der Ungleichförmigkeit der Riemenlauf variiert wird, werden im Folgenden auch die Nutverengungen als Erhebungen bezeichnet und analog Nuterweiterungen als Senken.

Zur zeitlichen Variation der örtlichen Riemenspannung zeigen die drei linken Nuten 15 im Winkelbereich von 228° (= -132°) bis 68° eine Senke (=Erweiterung), im Winkelbereich von 68° bis 156° einen mittleren, normalen Nutquerschnitt und im Winkelbereich von 156° bis 228° eine Erhebung (=Verengung) und die drei rechten Nuten 15 im Winkelbereich von 310° (= -50°) bis 52° einen mittleren, normalen Nutquerschnitt und im Winkelbereich von 52° bis 310° eine Senke (=Erweiterung).

Die Figuren 15 und 16 folgen dem vergrößernden Maßstabe 2:1; nur die Varianz der Nutweite'- damit diese nicht in der Strichstärke untergeht - ist gegenüber dieser allgemeinen Maßstäblichkeit 3-fach vergrößert dargestellt.

Die oberhalb der Figur 15 angeordnete Figur 16 zeigt einen Querschnitt durch das Rad gemäß Fig. 15 entlang der dort mit XVI-XVI bezeichneten Linie, gemessen von der willkürlich festgelegten 0° Linie in Figur 15 am unteren Bildrande um 180° phasenversetzt. In dieser Winkelstellung zeigen die drei linken Nuten 15 ihren engsten Querschnitt und die drei rechten Nuten 15 ihren weitesten Querschnitt.

Zusammenfassend kommt es zur Abflachung des scharfen Resonanzgipfels (und der weiteren Resonanzgipfel bei ganzzahligen Vielfachen der Resonanzfrequenz) darauf an, die örtliche Trumspannung über der Zeit zu variieren, wobei vorzugsweise die über dem Querschnitt gemittelte Trumspannung über der Zeit kaum oder gar nicht variiert wird. Um dabei nicht zusätzliche Querschwingungen zu erregen und keine scherenden und damit den Abrieb erhöhenden Querkräfte in den Riemen, insbesondere in dessen Rücken, einzuleiten, ist entscheidend, dass die Extremlinie einer jeden Ungleichförmigkeit exakt in Umfangsrichtung verläuft.

Die folgende Bezugszeichenliste gehört zur Beschreibung:

**Bezugszeichenliste**

| | | |
|---|---|---|
| 1 Rad | | (sei es als Spannrolle oder als Umlenkrolle oder als profilierte oder gezahnte Scheibe) |
| 1a | | Rad wie dargestellt in den Figuren 1 und 2 |
| 1b | | Rad wie dargestellt in den Figuren 3, 4 und 5 |
| 1c | | Rad wie dargestellt in den Figuren 6, 7 und 8 |

sowie der Figurenfolge 9

| | | |
|---|---|---|
| 1d | | Rad wie dargestellt in der Figur 10 und der Figurenfolge 11 |
| 1e | | Rad wie dargestellt in der Figur 12 und der Figurenfolge 13 |
| 1f | | Rad wie dargestellt in den Figuren 15 und 16 |
| 2 | | Trume |
| | 2a | Leertrum |
| | 2b | Lasttrum |
| 3 | | Erhebung auf der Mantelfläche des Rades 1 |
| 4 | | Senke auf der Mantelfläche des Rades 1 4.1 bis 4.4 einzelne Senken des Rades la |
| 5 | | Extremlinie (auch Gipfellinie oder noch treffender: Kammlinie) einer Erhebung 3 |
| 6 | | Extremlinie (auch Tallinie) einer Senke 4 |
| 7 | | Riemen (sei es ein Keilrippenriemen oder ein Zahnriemen oder ein Flachriemen) |
| 8 | | Mantelfläche eines jeglichen erfindungsgemäßen Rades 1 |
| 9 | | exakt kreisförmige Schnittlinie in dünner strichpunktierter Linie in der Mitte des in der Figur 10 gezeigten Rades 1d oder in den Ebenen von einem Viertel und drei Viertel der Breite des Rades le |
| 10 | | Rotationsachse des Rades 1 |
| 11 | | Spannrolle in Figur 14 |
| 12 | | profilierte Räder im Zahnriementrieb nach Figur 14 |
| | 12a | Kurbelwellenritzel |
| | 12b | Nockenwellenrad |
| | 12c | Einspritzpumpenrad |
| 13 | | seitliche Begrenzungen der Erhebung 3 des Rades 1b |
| 14 | | seitliche Begrenzungen der Senken 4.1 bis 4.4 des Rades la bzw. 4.1 und 4.2 des Rades 1b |
| 15 | | Nuten im Rade lf |
| M | | axiale Mittellinie eines Rades 1 |
| Z | | Rotationsachse des Rades in der Figur 10 |

**Patentansprüche**

**1.** Rad (1) für einen Riementrieb, vorzugsweise einen Zahnriementrieb,

wobei dieses Rad zur formschlüssigen Drehmoment-Übertragung zwischen sich und dem Riemen ungeeignet ist, insbesondere unverzahnt ist,
und auf seiner radial äußeren Fläche Erhebungen (3) und/oder Senken (4), mit Extremlinien zur Variation der örtlichen Riemenspannung über dem Raddrehwinkel aufweist, wobei die Extremlinien Linien des größten bzw. Kleinsten Radius zur Rotationsachse des Rades sind, dadurch gekennzeichnet, dass die jeweilige Extremlinie (5, 6) der Erhebungen (3) und/oder Senken (4) exakt in Umfangsrichtung verläuft, wobei das Rad (1) in all den Drehwinkelstellungen quer zur Riemenlaufrichtung geschnitten, wo das Rad (1) eine Erhebung (3) und/oder eine Senke (4) aufweist, einen über der axialen Erstreckung des Rades schwankenden Radius aufweist.

2. Rad (1) nach Anspruch 1, dadurch gekennzeichnet, dass alle Erhebungen (3) und Senken (4) auf der Mantelfläche eine Bogenwinkelgröße im Bereich zwischen 50° und 150° aufweisen.

3. Rad (1) nach Anspruch 1 oder 2, dadurch gekennzeichnet, dass es keine Verzahnung aufweist.

4. Rad (1) nach zumindest einem der voran gehenden Ansprüche, dadurch gekennzeichnet, dass die Abwicklung der Radkontur achsensymmetrisch ist zur axial mittigen Geraden.

5. Rad (1) nach Anspruch 1 oder 2 oder 4, dadurch gekennzeichnet, dass es eine Multi-V-Längsprofilierung aufweist, wobei die Erhebungen (3) sich als Zonen engerer Nuten (15) darstellen können und die Senken (4) als Zonen erweiterter Nuten (15).

6. Riementrieb mit einem Riemen (7) und zumindest einer Spann- und/oder Umlenkrolle (1), die auf dem unprofilierten Riemenrücken abwälzt

wobei die Spann- und/oder Umlenkrolle (1) auf ihrer radial äußeren Fläche Erhebungen (3) und/oder Senken (4) mit Extremlinien zur Variation der örtlichen Riemenspannung über dem Raddrehwinkel aufweist, jedoch keine Profilierung, wobei die Extremlinien Linien des größten bzw. Kleinsten Radius zur Rotationsachse des Rades sind, dadurch gekennzeichnet, dass die jeweilige Extremlinie (5, 6) der Erhebungen (3) und/oder Senken (4) exakt in Umfangsrichtung verläuft, wobei die Spann- und/oder Umlenkrolle (1) quer zur Riemenlaufrichtung geschnitten in all den Drehwinkelstellungen, in denen sie (1) eine Erhebung (3) und/oder eine Senke (4) aufweist, einen über der axialen Erstreckung des Rades schwankenden Radius aufweist.

7. Keilrippenriementrieb mit einem Keilrippenriemen (7) und zumindest einem Antriebs- und/oder Abtriebsrad (1), welches auf seiner Mantelfläche in seiner Multi-V-Profilierung Erhebungen (3) und/oder Senken (4), mit Extremlinien zur Variation der örtlichen Riemenspannung über dem Raddrehwinkel aufweist, wobei die Extremlinien Linien des größten bzw. Kleinsten Radius zur Rotationsachse des Rades sind, wobei sich Erhebungen (3) als Verengungen und Senken als Erweiterungen von Nuten (15) darstellen können,

wobei sich das Antriebs- und/oder Abtriebsrad (1) mit dieser Mantelfläche auf der profilierten Seite des Riemens abwälzt, wobei die jeweilige Extremlinie (5, 6) der Erhebungen (3) und/oder Senken (4) exakt in Umfangsrichtung verläuft, wobei das An- und/oder Abtriebsrad (1) quer zur Riemenlaufrichtung geschnitten in all den Drehwinkelstellungen, in denen es eine Erhebung (3) und/oder eine Senke (4) aufweist, einen über der axialen Erstreckung des Rades schwankenden Radius aufweist.

## Claims

1. Wheel (1) for a belt drive, preferably a toothed belt drive, this wheel being unsuitable for the form-locking transmission of torque between it and the belt, this wheel being, more especially, non-toothed, and having, on its radially outer face, raised portions (3) and/or depressed portions (4) with extreme lines for varying the local belt tension over the angle of rotation of the wheel, the extreme lines being of the greatest or respectively smallest radius relative to the axis of rotation of the wheel, characterised in that the respective extreme line (5,6) of the raised portions (3) and/or depressed portions (4) extends exactly in the circumferential direction, the wheel (1) having a radius, which varies over the axial extension of the wheel, when cut transversely relative to the travel direction of the belt, in all of the positions of the angle of rotation where the wheel (1) has a raised portion (3) and/or a depressed portion (4).

2. Wheel (1) according to claim 1, characterised in that all of the raised portions (3) and depressed portions (4) on the surface have an arcuate angle size in the range between 50° and 150°.

3. Wheel (1) according to claim 1 or 2, characterised in that it has no toothing.

4. Wheel (1) according to at least one of the preceding claims, characterised in that the development of the wheel configuration is axis-symmetrical relative to the axially central straight line.

5. Wheel (1) according to claim 1 or 2 or 4, characterised in that it has a multi-V-shaped longitudinal profiling, the raised portions (3) being able to represent zones of narrower grooves (15), and the depressed portions (4) being able to represent zones of widened grooves (15).

6. Belt drive, having a belt (7) and at least one tension and/or guide roller (1), which travels along the non-profiled rear of the belt, the tension and/or guide roller (1) having, on its radially outer face, raised portions (3) and/or depressed portions (4) with extreme lines for varying the local belt tension over the angle of rotation of the wheel, but no profiling, the extreme lines being lines of the greatest or respectively smallest radius relative to the axis of rotation of the wheel, characterised in that the respective extreme line (5, 6) of the raised portions (3) and/or depressed portions (4) extends exactly in the circumferential direction, the tension andlor guide roller (1) having a radius, which varies over the axial extension of the wheel, when cut transversely relative to the travel direction of the belt in all of the positions of the angle of rotation in which it (1) has a raised portion (3) and/or a depressed portion (4).

7. Ribbed V-belt drive, having a ribbed V-belt (7) and at least one driving and/or driven wheel (1), which has, on its surface in its multi-V-shaped profiling, raised portions (3) and/or depressed portions (4) with extreme lines for varying the local belt tension over the angle of rotation of the wheel, the extreme lines being lines of the greatest or respectively smallest radius relative to the axis of rotation of the wheel, raised portions (3) being able to represent constricted portions of grooves (15), and depressed portions being able to represent widened portions of grooves (15), the driving and/or driven wheel (1) travelling with this surface on the profiled side of the belt, the respective extreme line (5, 6) of the raised portions (3) and/or depressed portions (4) extending exactly in the circumferential direction, the driving and/or driven wheel (1) having a radius, which varies over the axial extension of the wheel, when cut transversely relative to the travel direction of the belt in all of the positions of the angle of rotation in which it has a raised portion (3) and/or a depressed portion (4).

**Revendications**

1. Roue (1) destinée à une transmission à courroie, de préférence une transmission à courroie dentée, ladite roue n'étant pas adaptée, en particulier n'étant pas dentée, pour une transmission du couple de rotation par conjugaison de forme entre elle et la courroie, et comportant sur sa surface radiale extérieure des bosses (3) et/ou des cavités (4) avec des lignes extrémales, destinées à faire varier la tension locale de la courroie sur l'angle de rotation de la roue, les lignes extrémales étant des lignes du plus grand ou du plus petit rayon par rapport à l'axe de rotation de la roue, caractérisée en ce que chaque ligne extrémale (5, 6) des bosses (3) et/ou des cavités (4) est orientée exactement dans le sens de rotation, et la roue (1), dans toutes les positions d'angle de rotation, considérées transversalement au sens du mouvement de la courroie, dans lesquelles la roue (1) comporte une bosse (3) et/ou une cavité (4), présente un rayon oscillant sur la dimension axiale de la roue.

2. Roue (1) selon la revendication 1, caractérisée en ce que toutes les bosses (3) et les cavités (4) sur la surface latérale présentent un angle de courbure dont la valeur est comprise entre 50° et 150°.

3. Roue (1) selon la revendication 1 ou 2, caractérisée en ce qu'elle ne comporte pas de denture.

4. Roue (1) selon au moins l'une quelconque des revendications précédentes, caractérisée en ce que le développement du contour de la roue est symétrique à l'axe par rapport aux droites médianes dans le sens axial.

5. Roue (1) selon la revendication 1 ou 2 ou 4, caractérisée en ce qu'elle comporte un profilage longitudinal avec de multiples V, les bosses (3) constituant des zones à rainures étroites (15) et les cavités (4) des zones à rainures élargies (15).

6. Transmission à courroie comprenant une courroie (7) et au moins une poulie de tension et/ou poulie de déviation (1), qui tourne sur la face arrière non profilée de la courroie, dans laquelle la poulie de tension et/ou poulie de déviation (1) comporte sur sa surface radiale extérieure des bosses (3) et/ou des cavités (4) avec des lignes extrémales, destinées à faire varier la tension locale de la courroie sur l'angle de rotation de la roue, mais ne comporte pas de profilage, les lignes extrémales étant des lignes du plus grand ou du plus petit rayon par rapport à l'axe de rotation de la roue, caractérisée en ce que chaque ligne extrémale (5, 6) des bosses (3) et/ou des cavités (4) est orientée exactement dans le sens de rotation, et la poulie de tension et/ou poulie de déviation (1), dans toutes les positions d'angle de rotation, considérées transversalement au sens du mouvement de la courroie, dans lesquelles ladite poulie (1) comporte une bosse (3) et/ou une cavité (4), présente un rayon oscillant sur la dimension axiale de la roue.

7. Transmission à courroie trapézoïdale à nervures, comprenant une courroie trapézoïdale à nervures (7) et au moins une roue de commande et/ou roue motrice (1), qui comporte sur sa surface latérale, dans le profilage avec de multiples V, des bosses (3) et/ou des cavités (4) avec des lignes extrémales, destinées à faire varier la tension locale de la courroie sur l'angle de rotation de la roue, les lignes extrémales étant des lignes du plus grand ou du plus petit rayon par rapport à l'axe de rotation de la roue, dans laquelle les bosses (3) peuvent constituer des zones rétrécies des rainures (15) et les cavités des zones élargies desdites rainures, dans laquelle la roue de commande et/ou roue motrice (1) tourne avec ladite surface latérale sur le côté profilé de la courroie, dans laquelle chaque ligne extrémale (5, 6) des bosses (3) et/ou des cavités (4) est orientée exactement dans le sens de rotation, dans laquelle la roue de commande et/ou roue motrice (1), dans toutes les positions d'angle de rotation, considérées transversalement au sens du mouvement de la courroie, dans lesquelles ladite roue comporte une bosse (3) et/ou une cavité (4), présente un rayon oscillant sur la dimension axiale de la roue.

EP 0 928 908 B1

FIG. 1

FIG. 2

FIG. 4

FIG. 5

FIG. 3

FIG. 7

FIG. 8

FIG. 6

FIG. 9a

FIG. 9d

FIG. 9b

FIG. 9e

FIG. 9c

FIG. 9f

FIG. 10

2 : 1

M

1d

FIG. 11a   10

5 hinten   M   6 vorne

1d

FIG. 11e   10

2:1

M

1d

FIG. 11b   10

M

1d

FIG. 11f   10

5 hinten   M   6 vorne

1d

FIG. 11c   10

6 hinten   M   5 vorne

1d

FIG. 11h   10

FIG. 12

2:1

m   M   m

1e

FIG. 13a       10

$2:1$

m   M   m

1e

FIG. 13b       10

5außen   m   M   m   5außen

6 mitten

1e

FIG. 13e       10

m   M   m

1e

FIG. 13f       10

5außen   m   M   m   5außen

6 mitten

1e

FIG. 13c       10

6außen   m   M   m   6außen

5 mitten

1e

FIG. 13h       10

12b

7

12c

2b

1

2a

2b

11

2a

FIG. 14

12a

FIG. 16

5    6

1f

FIG. 15

XVI                                    XVI

0°

15    15    15    15    15    15